# EUROPEAN PATENT APPLICATION

(11) **EP 4 819 594 A1**
(43) Date of publication of application: **07.10.2026**
(21) Application number: 26167453.5
(22) Date of filing: 25.03.2026
(51) Int. Cl.: H04N 1/00, H04N 1/60, H04N 1/387

(54) **IMAGE PROCESSING APPARATUS, CONTROL METHOD, AND PROGRAM**

(30) Priority: 31.03.2025 JP 2025058815
(71) Applicant: Canon Kabushiki Kaisha, Tokyo 146-8501 (JP)
(72) Inventor: TACHI, Daiki, Tokyo (JP)
(74) Representative: WESER & Kollegen Patentanwälte PartmbB

(57) **Abstract**

A preview region is utilized effectively. In a case where the number of images is equal to or less than a predetermined number, an image processing apparatus (101) determines an image size based on the number of the images as an image size displayed in a preview region (700), and in a case where the number of the images is greater than the predetermined number, determines a predetermined image size as the image size displayed in the preview region (700).

## Description

### BACKGROUND

### Field of the Technology

The present disclosure relates to preview display.

### Description of the Related Art

Conventionally, a preview function to confirm an image included in data read by an image processing apparatus before an operation such as transmission and printing has been known. The preview function includes a display method to display multiple thumbnail images in a preview region in the form of a list. Japanese Patent Laid-Open No. 2010-171780 discloses a technique of displaying a preview image of a read image and a thumbnail image obtained by contracting the read image on the same screen.

### SUMMARY

Recently, there has been a demand for effective use of a preview region.

The present disclosure in its first aspect provides an image processing apparatus as specified in claim 1. Optional features are specified in claim 2 to 14.

The present disclosure in its second aspect provides a control method as specified in claim 15.

The present disclosure in its third aspect provides a program as specified in claim 16.

Features of the present disclosure will become apparent from the following description of embodiments with reference to the attached drawings. The following description of embodiments are described by way of example.

### BRIEF DESCRIPTION OF THE DRAWINGS

Fig. 1 is a diagram illustrating an example of an image processing system;
Fig. 2 is a block diagram illustrating an example of a configuration of an MFP;
Fig. 3 is a block diagram illustrating an example of a configuration of a file server;
Fig. 4 is a diagram illustrating an example of a software configuration of the MFP;
Fig. 5 is a diagram illustrating an example of a home screen;
Fig. 6 is a diagram illustrating an example of an operation screen;
Fig. 7A is a diagram illustrating an example of the preview screen in a case where the number of the source images is one;
Fig. 7B is a diagram illustrating an example of the preview screen in a case where the number of the source images is two;
Fig. 7C is a diagram illustrating an example of the preview screen in a case where the number of the source images is four;
Fig. 7D is a diagram illustrating an example of the preview screen in a case where the number of the source images is eight;
Fig. 7E is a diagram illustrating an example of the preview screen in a case where the number of the source images is nine;
Fig. 8 is a diagram illustrating an example of a focused preview screen;
Fig. 9 is a diagram illustrating an example of a threshold setting screen;
Fig. 10 is a flowchart illustrating an example of a processing procedure executed by the MFP;
Fig. 11 is a flowchart illustrating an example of another processing procedure executed by the MFP;
Fig. 12A is a diagram illustrating an example of the preview screen in a case where the number of the source images is eight;
Fig. 12B is a diagram illustrating an example of the preview screen after the image is deleted;
Fig. 13A is a diagram illustrating an example of the preview screen in a case where the thumbnail image 701 is being moved; and
Fig. 13B is a diagram illustrating an example of the preview screen in a case where the fourth thumbnail image 701 is added while the thumbnail image 701 is being moved.

### DESCRIPTION OF THE EMBODIMENTS

Hereinafter, with reference to the attached drawings, the present disclosure is explained in detail in accordance with preferred embodiments. Configurations shown in the following embodiments are merely exemplary and the present disclosure is not limited to the configurations shown schematically. Incidentally, an identical reference numeral is assigned to an identical constituent and an explanation thereof is made.

### <First Embodiment>

### (Overview)

In some cases, a list of thumbnail images is displayed in a preview region in a screen. In this case, a region size, which is the size of the preview region, is fixed, and an image size, which is the size of the thumbnail image, is also fixed. For this reason, in a case where there are a small number of thumbnail images, a space in which nothing is displayed is markedly noticeable in the preview region. Hereinafter, an example of effective utilization of the preview region is described.

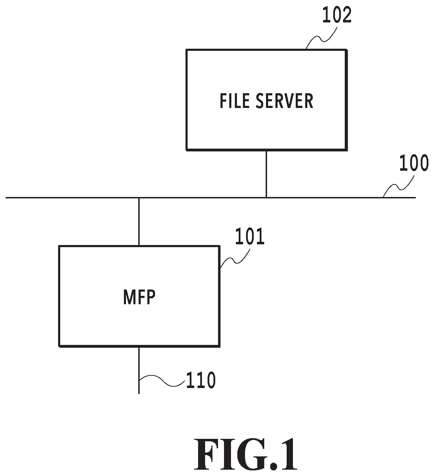

Fig. 1 is a diagram illustrating an example of an image processing system. In the image processing system, a Multifunction Peripheral (MFP) 101 and a file server 102 are communicably connected to each other via a local area network (LAN) 100. The MFP 101 is an example of an image processing apparatus. The file server 102 is an example of a file management apparatus.

The MFP 101 may transmit image data to a folder in the file server 102 as an address. For example, a Server Message Block (SMB), a File Transfer Protocol (FTP), and the like are used for the transmission of the image data. Additionally, the MFP 101 may transmit the image data to also a folder in a not-illustrated client PC as the address in addition to the file server 102. Moreover, the MFP 101 may transmit the image data by e-mail via a not-illustrated mail server. Furthermore, the MFP 101 is connected to a PSTN 110 that is a public telephone network and may transmit and receive a fax to and from a not-illustrated fax apparatus. The MFP 101 stores an address table indicating multiple addresses. The MFP 101 may obtain the address table via the LAN 100 and use the address table.

In the present embodiment, the image processing system includes the MFP 101 and the file server 102; however, the image processing system not including the file server 102 but only including the MFP 101 may be applicable.

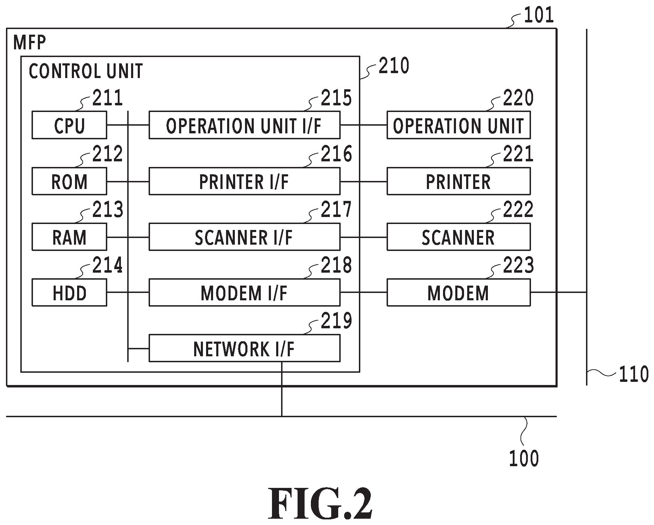

Fig. 2 is a block diagram illustrating an example of a configuration of the MFP 101. The MFP 101 includes a control unit 210. The control unit 210 is a controller that controls operations of the overall MFP 101. The control unit 210 includes a CPU 211, a ROM 212, a RAM 213, an HDD 214, an operation unit I/F 215, a printer I/F 216, a scanner I/F 217, a modem I/F 218, and a network I/F 219.

The CPU 211 performs control to implement various functions of the MFP 101. The CPU 211 includes one or more processors. The CPU 211 performs various types of processing by executing a program or activating hardware. The execution of the program is performed by loading the program into the RAM 213. The processing by the CPU 211 may be performed in cooperation with a not-illustrated GPU.

The ROM 212 stores various data. For example, the ROM 212 stores the program. The program includes a boot program, a device driver that allows a device to operate, or the like. The RAM 213 is used as a temporal storage region such as a main memory and a working area of the CPU 211. The HDD 214 stores image data, various programs, and so on.

The operation unit I/F 215 connects the control unit 210 to an operation unit 220. The operation unit 220 can display various user interfaces in a display region and also can accept input of an instruction and the like according to an operation by a user performed on the operation unit 220. The operation unit 220 may be a touch panel including a liquid crystal layer and a touch sensor layer.

The printer I/F 216 connects the control unit 210 to a printer 221. The printer 221 prints printing contents based on the image data on a printing medium such as paper. The image data is transferred from the control unit 210 via the printer I/F 216.

The scanner I/F 217 connects the control unit 210 to a scanner 222. The scanner 222 generates the image data (image file) by reading an image of a document and inputs the image data to the control unit 210 via the scanner I/F 217. The control unit 210 may perform file transmission or mail transmission of the image data (image file) supplied from the scanner 222.

The modem I/F 218 connects the control unit 210 to a modem 223. The modem 223 connects the control unit 210 to the PSTN 110. The modem 223 executes fax transmission and reception to and from the fax apparatus via a public network.

The network I/F 219 connects the control unit 210 to the LAN 100. The network I/F 219 transmits and receives various types of information to and from an apparatus outside the MFP 101 via the LAN 100. The information may include the image data to be transmitted from the control unit 210 to the file server 102.

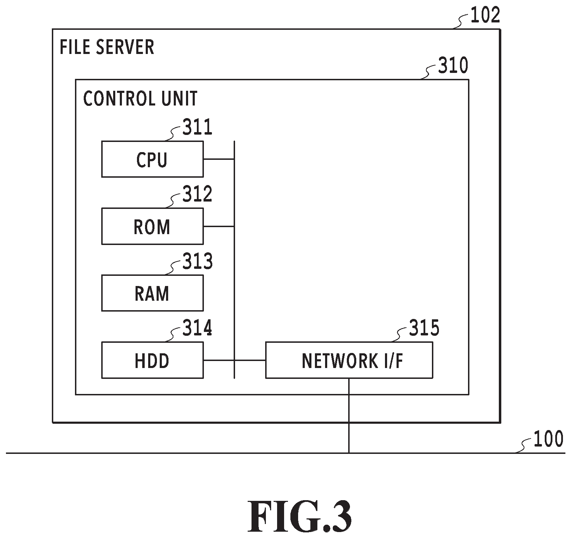

Fig. 3 is a block diagram illustrating an example of a configuration of the file server 102. The file server 102 includes a control unit 310. The control unit 310 is a controller that controls operations of the overall file server 102. The control unit 310 includes a CPU 311, a ROM 312, a RAM 313, an HDD 314, and a network I/F 315.

The CPU 311 performs control to implement various functions of the file server 102. The CPU 311 includes one or more processors. The CPU 311 performs various types of processing by executing a program or activating hardware. The execution of the program is performed by loading the program into the RAM 313. The processing by the CPU 311 may be performed in cooperation with a not-illustrated GPU.

The ROM 312 stores various data. For example, the ROM 312 stores the program. The program includes a boot program, a device driver that allows a device to operate, or the like. The RAM 313 is used as a temporal storage region such as a main memory and a working area of the CPU 311. The HDD 314 stores image data, various programs, and so on.

The network I/F 315 connects the control unit 310 to the LAN 100. The network I/F 315 transmits and receives various types of information to and from another apparatus via the LAN 100.

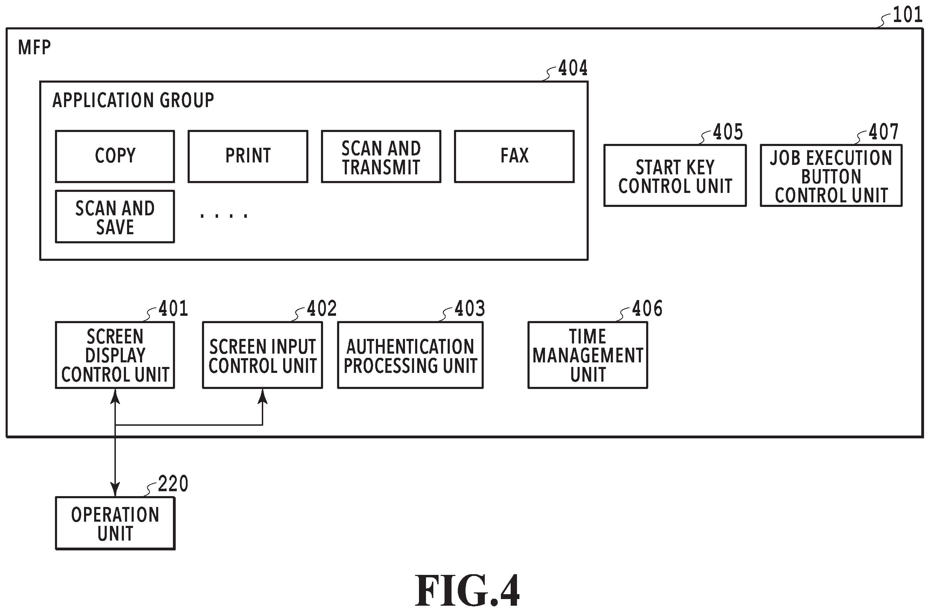

Fig. 4 is a diagram illustrating an example of a software configuration of the MFP 101. As a software configuration of the MFP 101, a screen display control unit 401, a screen input control unit 402, an authentication processing unit 403, an application group 404, a start key control unit 405, a time management unit 406, and a job execution button control unit 407 are included. In order to establish communication between the functional units, the CPU 211 controls the ROM 212, the RAM 213, the HDD 214, the operation unit I/F 215, the printer I/F 216, the scanner I/F 217, the modem I/F 218, and the network I/F 219.

The screen display control unit 401 performs management of a screen of each application, processing of transferring information on the screen to the display region of the operation unit 220, and processing of notifying the application of an event inputted from the operation unit 220.

The screen input control unit 402 receives and analyzes a signal that is converted by the operation unit I/F 215 with the operation performed on the operation unit 220 and converts the signal into a format transmittable to the application. Additionally, the screen input control unit 402 instructs the screen display control unit 401 to notify the application of the event.

The authentication processing unit 403 displays an authentication screen in the display region of the operation unit 220 and performs user authentication by using authentication information such as an ID and a password inputted by the user. In a case where the user authentication is successful, the authentication processing unit 403 performs login processing to allow the user who succeeds the user authentication to log into the MFP 101. In a case where an instruction to log out is provided, the authentication processing unit 403 performs logout processing to allow the user who is logging in to log out of the MFP 101.

The application group 404 is an application group that operates on the MFP 101. Each application of the application group 404 is executed by the CPU 211. Once an instruction inputted via the screen input control unit 402 according to an operation by the user is accepted, the CPU 211 allows the application included in the application group 404 and corresponding to the instruction to operate. A part of the application group 404 includes the following application; however, the application group 404 is not limited to the following application. For example, an application added later according to an instruction by the user may be included in the application group 404.

The application group 404 includes the application that executes a "copy" function. The "copy" function is a function to print the image data, which is generated by reading the image of the document with the scanner 222, by the printer 221. The application group 404 includes the application that executes a "print" function. The "print" function is a function to print the image with the printer 221 based on a print job inputted from an external apparatus such as a PC. The application group 404 includes the application that executes a "scan and transmit" function. The "scan and transmit" function is a function to transmit the image data, which is generated by reading the image of the document with the scanner 222, to an external apparatus such as the file server 102, for example. The application group 404 includes the application that executes a "scan and save" function. The "scan and save" function is a function to save the image data, which is generated by reading the image of the document with the scanner 222, into an external memory. The application group 404 includes the application that executes a "fax" function. The "fax" function is a function to transmit the image, which is generated by reading the image of the document, via the PSTN 110.

Once pressing of a start key is detected by the screen input control unit 402, the start key control unit 405 transmits a notification about the execution of the start key to the application corresponding to the start key. The application that accepts the notification about the execution of the start key executes the function corresponding to the start key.

The time management unit 406 manages the current clock time since the MFP 101 is activated, and the current clock time is notified according to an instruction from the start key control unit 405 and the job execution button control unit 407.

The job execution button control unit 407 performs setting of the function of the corresponding application according to the instruction from the user and stores information indicating setting contents into the HDD 214. Additionally, the job execution button control unit 407 detects pressing of a registered job execution button and executes the application corresponding to the job execution button according to the setting contents registered on the HDD 214 in advance.

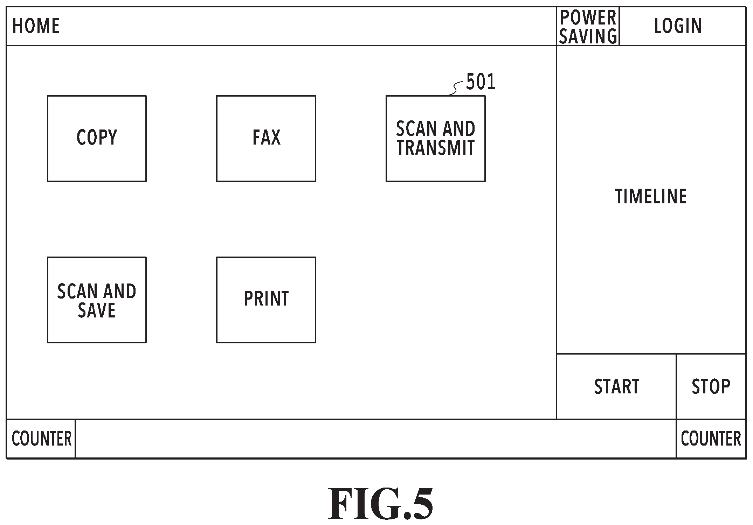

Fig. 5 is a diagram illustrating an example of a home screen. Once the MFP 101 is powered on, the home screen is displayed in the display region of the operation unit 220 by the CPU 211, for example. An operation key 501 is displayed on the home screen. The operation key 501 is an operation key to activate the application that executes the "scan and transmit" function. Once the user presses the operation key 501, the CPU 211 accepts an execution instruction to scan and transmit. In this case, the CPU 211 allows the display to transition from the home screen to an operation screen.

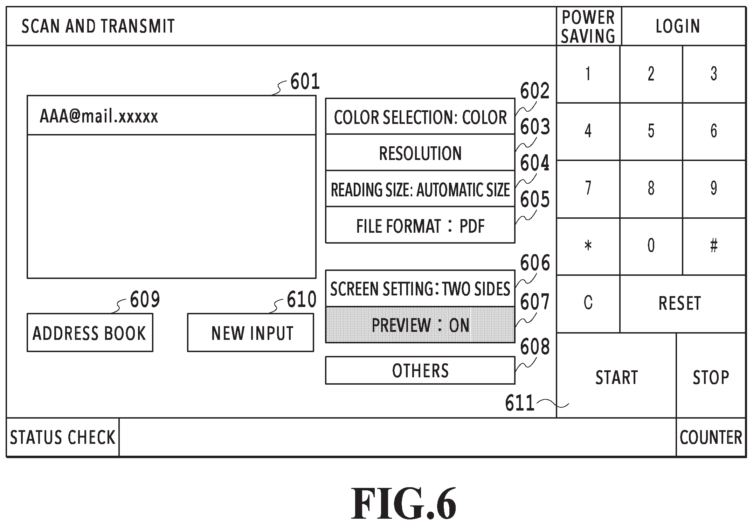

Fig. 6 is a diagram illustrating an example of the operation screen. A transmission destination item 601 is displayed on the operation screen illustrated in Fig. 6. The transmission destination item 601 is an item to designate a transmission destination. In the transmission destination item 601, the address to which the image data is transmitted is designated. An operation key 609 or an operation key 610 is used to designate the address in the transmission destination item 601. Additionally, multiple scan setting items are displayed on the operation screen illustrated in Fig. 6. Information indicating contents set in each scan setting item is stored in the HDD 214 and the like as scan setting information. Scanning is performed according to the contents indicated by the scan setting information.

In the example in Fig. 6, a color item 602 to set a color in a case of reading with the scanner 222 is included in the scan setting items. The user may set a desired color from options on a pop-up screen displayed by pressing a not-illustrated button.

Additionally, in the example in Fig. 6, a resolution item 603 to set a resolution (reading resolution) in a case of reading with the scanner 222 is included in the scan setting items. The user may set a desired resolution from options on a pop-up screen displayed by pressing a not-illustrated button.

Moreover, in the example in Fig. 6, a size item 604 to set a reading size of the document read by the scanner 222 is included in the scan setting items. The user may set a desired reading size from options on a pop-up screen displayed by pressing a not-illustrated button.

Furthermore, in the example in Fig. 6, a format item 605 to set a file format in a case of converting the document read by the scanner 222 into electronic data is included in the scan setting items. The user may set a desired file format from options on a pop-up screen displayed by pressing a not-illustrated button.

Additionally, in the example in Fig. 6, a reading side item 606 to set whether to read one side or two sides of the document read by the scanner 222 is included in the scan setting items. The user may set one side or two sides from options on a pop-up screen displayed by pressing a not-illustrated button.

Moreover, in the example in Fig. 6, a preview item 607 to set whether to confirm the document read by the scanner 222 is included in the scan setting items. The user may set "ON" or "OFF" from options on a pop-up screen displayed by pressing a not-illustrated button. If the preview item 607 is set to "ON," preview of a reading result by the scanner 222 is displayed. If the preview item 607 is set to "OFF," no preview is displayed.

Multiple operation keys are displayed on the operation screen illustrated in Fig. 6 as operation objects that are graphical user interfaces. In the example in Fig. 6, an operation key 608 to display various setting screens for the document read by the scanner 222 is displayed. The user may select a desired setting menu from the screen displayed by pressing the operation key 608 and may perform various settings for the document from a screen corresponding to the selected setting menu.

Additionally, in the example in Fig. 6, the operation key 609 to display a screen to select the transmission address saved in the HDD 214 of the MFP 101 is displayed. The user may designate the transmission address from the screen displayed by pressing the operation key 609. The address designated by the user is displayed in the transmission destination item 601.

Moreover, in the example in Fig. 6, the operation key 610 to display an input screen of the address to which the image data is transmitted is displayed. The user may input a desired address to the screen displayed by pressing the operation key 610. The address designated by being inputted to the address input screen is displayed in the transmission destination item 601.

Furthermore, in the example in Fig. 6, an operation key 611 to execute "scan and transmit" is displayed. In a case where the user presses the operation key 611 in a state in which the preview item 607 is set to "OFF," the application that executes the "scan and transmit" function is activated by the CPU 211. In this case, the CPU 211 executes obtainment processing and transmission processing. The obtainment processing is processing in which the scanner 222 is allowed to read the document according to the setting information indicating the contents set in each scan setting item, and the image data obtained as the reading result by the scanner 222 is obtained. The transmission processing is processing in which the image data obtained by the obtainment processing is transmitted to the address designated by the transmission destination item 601.

In a case where the user presses the operation key 611 in a state in which the preview item 607 is set to "ON," the application that executes the "scan and transmit" function is activated by the CPU 211. In this case, the CPU 211 executes the above-described obtainment processing, and before the above-described transmission processing, the CPU 211 allows the display to transition from the operation screen to a preview screen.

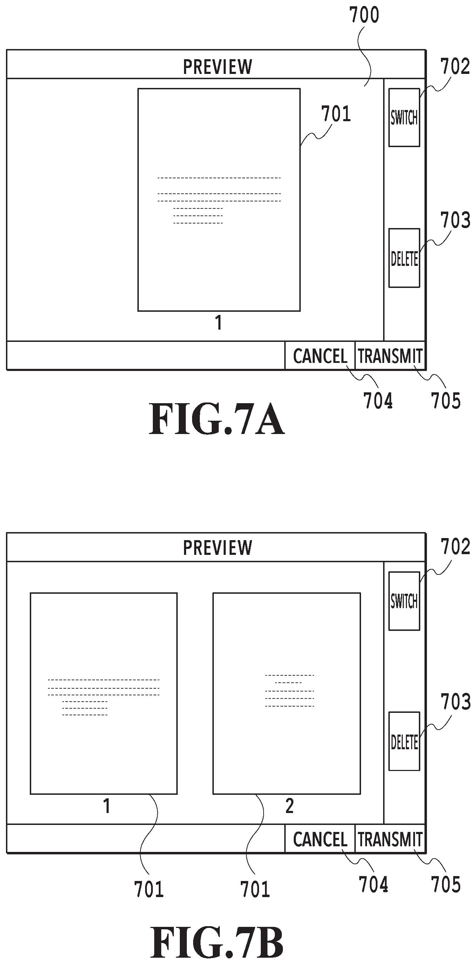

Fig. 7A-7E are a diagram illustrating an example of the preview screen. The preview screen is a screen to allow the user to confirm the image in advance. The preview screen is displayed based on the data obtained by the control unit 210. The data in the present embodiment is the image data obtained from the scanner 222 by the above-described obtainment processing.

A preview region 700 is provided on the preview screen. In the present embodiment, the size of the preview region 700 is fixed. A thumbnail image 701, which is an image contracted smaller than a source image, is displayed in the preview region 700. The source image in the present embodiment is the image read by the scanner 222. According to the number of the source images, the image size of the thumbnail image 701 displayed in the preview region 700 is different. Description of the image size of the thumbnail image 701 is provided later.

Multiple operation keys are displayed on the preview screen as operation objects that are graphical user interfaces.

In the example in Fig. 7A-7E, an operation key 702 to switch the display from the preview screen to a focused preview screen is displayed. The focused preview screen is a screen displaying and focusing on one thumbnail image 701 displayed in the preview region 700. The user may switch the display by pressing the operation key 702. Note that, in a case where the number of the source images included in the image data is equal to or less than a prescribed number, the display of the operation key 702 may be changed to a state in which the operation is invalid. For example, the display of the operation key 702 is changed to a hidden state or a gray-out state. The above-described prescribed number is fixed to one; however, the prescribed number may be changeable to the number inputted according to the operation of the operation unit 220 by the user.

Additionally, in the example in Fig. 7A-7E, an operation key 703 to delete the thumbnail image 701 is displayed. The user may delete the selected thumbnail image 701 by pressing the operation key 703 after pressing and selecting the thumbnail image 701 displayed in the preview region 700. Note that, the source image of the deleted thumbnail image is deleted from the image data and is not included in the image data to be transmitted.

Moreover, in the example in Fig. 7A-7E, an operation key 704 to perform transmission cancel of the image data being previewed is displayed. In a case where the user presses the operation key 704, the CPU 211 accepts an instruction to cancel the transmission. In this case, the CPU 211 does not execute the above-described transmission processing. Note that, in a case where the user presses the operation key 704, the CPU 211 closes the preview screen and displays the home screen illustrated in Fig. 5 in the display region of the operation unit 220.

Furthermore, in the example in Fig. 7A-7E, an operation key 705 to perform transmission start of the image data being previewed is displayed. In a case where the user presses the operation key 705, the CPU 211 accepts a transmission start instruction. In this case, the CPU 211 executes the above-described transmission processing. Note that, in a case where the user presses the operation key 705, the CPU 211 closes the preview screen and displays the home screen illustrated in Fig. 5 in the display region of the operation unit 220.

In the present embodiment, the image size of the thumbnail image 701 displayed in the preview region 700 is varied depending on the number of the source images included in the image data. Specifically, in a case where the number of the source images is a first number, the image size of the thumbnail image 701 is smaller than the image size in a case where the number of the source images is a second number, which is less than the first number.

Fig. 7A is a diagram illustrating an example of the preview screen in a case where the number of the source images is one. In the example in Fig. 7A, the thumbnail image 701 corresponding to the one source image is displayed in the preview region 700. The image size of the one thumbnail image 701 is the maximum of the variable image sizes.

Fig. 7B is a diagram illustrating an example of the preview screen in a case where the number of the source images is two. In the example in Fig. 7B, the thumbnail image 701 corresponding to each of the two source images is displayed in the preview region 700. The image size of each of the two thumbnail images 701 is contracted smaller than that in a case where the number of the thumbnail images 701 is one.

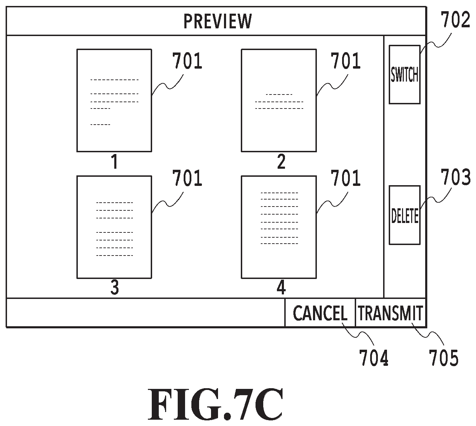

Fig. 7C is a diagram illustrating an example of the preview screen in a case where the number of the source images is four. In the example in Fig. 7C, the thumbnail image 701 corresponding to each of the four source images is displayed in the preview region 700. The image size of each of the four thumbnail images 701 is contracted smaller than that in a case where the number of the thumbnail images 701 is two. Note that, although the four thumbnail images 701 are each arranged in two rows, in each of which there are two thumbnail images 701 at intervals, in the example in Fig. 7C, another layout may be applied.

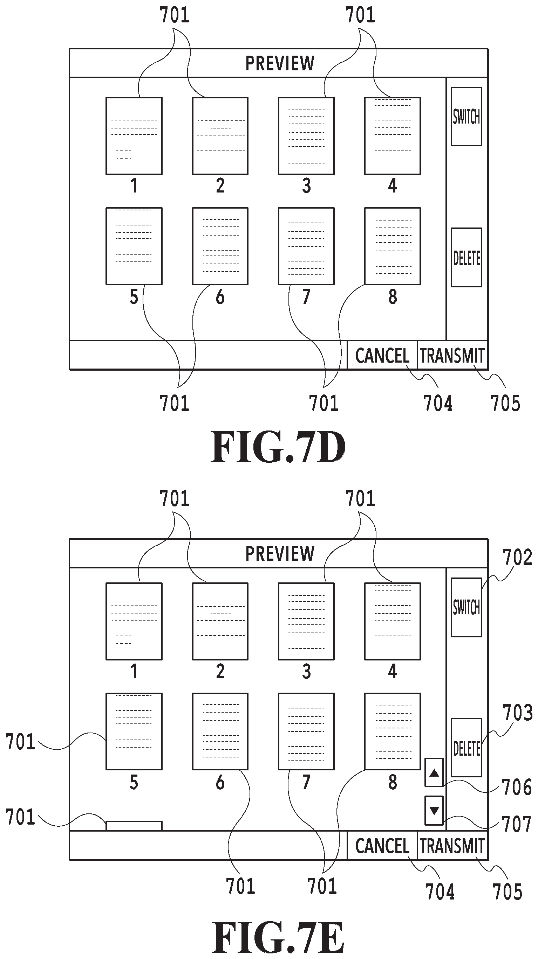

Fig. 7D is a diagram illustrating an example of the preview screen in a case where the number of the source images is eight. In the example in Fig. 7D, the thumbnail image 701 corresponding to each of the eight source images is displayed in the preview region 700. The image size of each of the eight thumbnail images 701 is contracted smaller than that in a case where the number of the thumbnail images 701 is four. Note that, although the eight thumbnail images 701 are each arranged in two rows, in each of which there are four thumbnail images 701 at intervals, in the example in Fig. 7D, another layout may be applied.

In the present embodiment, an upper limit number of the number of the thumbnail images that can be displayed in the preview region 700 is set to eight. The display region of the operation unit 220 in the MFP 101 is smaller than a display of a PC and the like. Accordingly, the upper limit number is set to obtain a clear view of the thumbnail image 701. In a case where the upper limit number is set to eight, and the number of the source images included in the image data is nine or more, the list of all the thumbnail images cannot be displayed in the preview region 700. In this case, the preview region 700 is switched to scroll display. Fig. 7E is a diagram illustrating an example of the preview screen in a case where the number of the source images is nine.

In the example in Fig. 7E, an operation key 706 and an operation key 707 are displayed in the preview region 700. The operation key 706 and the operation key 707 are operation objects to move a display range of the preview region 700. The user may move the display range of the preview region 700 in a specific direction by pressing the operation key 706 or the operation key 707. In the example in Fig. 7E, the specific direction is an up or down direction of the preview screen. Note that, the display range of the preview region 700 is not limited to a case of the movement according to pressing of the operation key 706 and the operation key 707 and may also be moved according to a touch operation performed on the preview region 700.

In a case where the preview region 700 is switched to the scroll display, the thumbnail images 701 of the upper limit number are displayed in the preview region 700. On the other hand, the remaining thumbnail image, whose number exceeds the upper limit number, is displayed along with the movement of the display range of the preview region 700.

The image size of the thumbnail images 701 of the upper limit number is contracted smaller than that in a case where the number of the thumbnail images 701 is less than the upper limit number. On the other hand, although the image size of the remaining thumbnail image, whose number exceeds the upper limit number, is contracted nearly equally to the image size of the thumbnail images 701 of the upper limit number, it is not limited thereto. For example, the image size of the remaining thumbnail image, whose number exceeds the upper limit number, may be contracted to the image size set in advance. Alternatively, the image size of the remaining thumbnail image, whose number exceeds the upper limit number, may be contracted to the image size associated with the excess number. The excess number is the number obtained by subtracting the upper limit number from the number of the source images included in the image data. For example, in a case where the number of the source images included in the image data is ten, and the upper limit number is eight, the excess number is two. In this case, the image size of the remaining thumbnail image, whose number exceeds the upper limit number, is contracted to the image size associated with two as the excess number of the images. The image size in this case is greater than the image size associated with three as the excess number of the images, and is smaller than the image size associated with one as the excess number of the images.

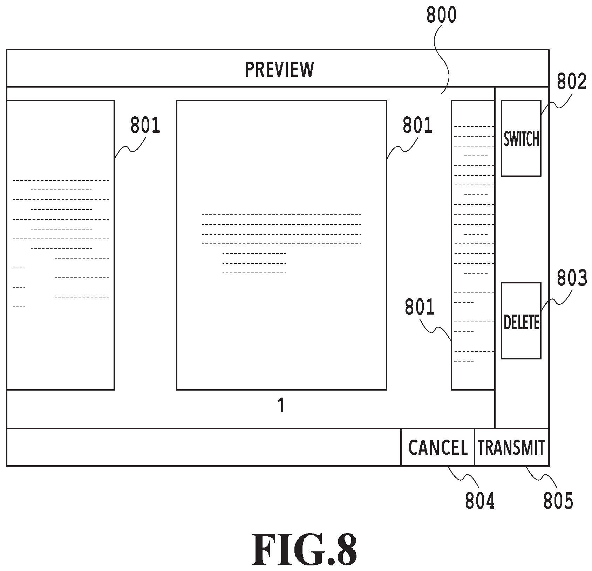

Fig. 8 is a diagram illustrating an example of the focused preview screen. In a case where the operation key 702 on the preview screen illustrated in Fig. 7A-7E is pressed, the display is switched from the preview screen illustrated in Fig. 7A-7E to the focused preview screen illustrated in Fig. 8.

A second preview region 800 is provided on the focused preview screen. One thumbnail image 801 is displayed in the center of the second preview region 800. A part of the thumbnail image 801 that precedes the thumbnail image 801 is displayed in a left end portion of the second preview region 800. A part of the thumbnail image 801 that follows the thumbnail image 801 is displayed in a right end portion of the second preview region 800.

In a case where the operation key 702 is pressed in a state in which the thumbnail image 701 in the preview region 700 illustrated in Fig. 7A-7E is selected, the thumbnail image 801 corresponding to the selected thumbnail image 701 is displayed in the center of the second preview region 800. In this case, the image size of the thumbnail image 801 is equal to or greater than the image size of the thumbnail image 701.

In a case where the operation key 702 is pressed in a state in which the thumbnail image 701 in the preview region 700 illustrated in Fig. 7A-7E is not selected, the thumbnail image 801 corresponding to the first thumbnail image 701 is displayed in the center of the second preview region 800. In this case, the image size of the thumbnail image 801 is equal to or greater than the image size of the thumbnail image 701. Additionally, since there is no image that precedes the thumbnail image 801, the left end portion of the second preview region 800 is blank.

Multiple operation keys are displayed on the focused preview screen as operation objects that are graphical user interfaces.

In the example in Fig. 8, an operation key 802 to switch the display from the focused preview screen illustrated in Fig. 8 to the preview screen illustrated in Fig. 7A-7E is displayed. The user may switch the display by pressing the operation key 802.

Additionally, in the example in Fig. 8, an operation key 803 to delete the thumbnail image 801 is displayed. The user may delete the thumbnail image 801 displayed in the center of the second preview region 800 by pressing the operation key 803. Note that, the source image of the deleted thumbnail image is deleted from the image data and is not included in the image data to be transmitted.

Moreover, in the example in Fig. 8, an operation key 804 to perform transmission cancel of the image data being previewed is displayed. In a case where the user presses the operation key 804, the CPU 211 accepts an instruction to cancel the transmission. In this case, the CPU 211 does not execute the above-described transmission processing. Note that, in a case where the user presses the operation key 804, the CPU 211 closes the focused preview screen and displays the home screen illustrated in Fig. 5 in the display region of the operation unit 220.

Furthermore, in the example in Fig. 8, an operation key 805 to perform transmission start of the image data being previewed is displayed. In a case where the user presses the operation key 805, the CPU 211 accepts a transmission start instruction. In this case, the CPU 211 executes the above-described transmission processing. Note that, in a case where the user presses the operation key 805, the CPU 211 closes the focused preview screen and displays the home screen illustrated in Fig. 5 in the display region of the operation unit 220.

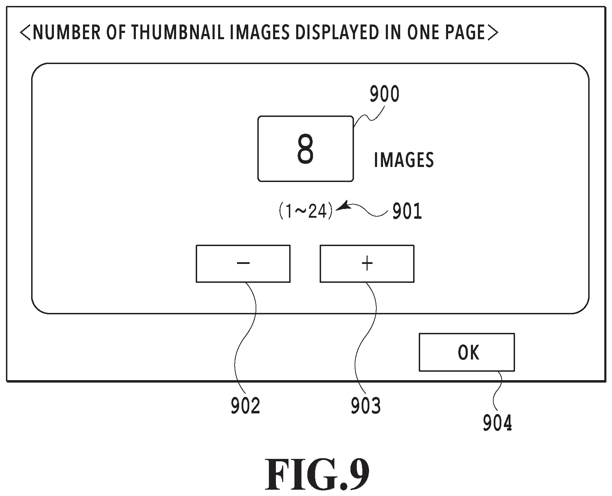

Fig. 9 is a diagram illustrating an example of a threshold setting screen. The threshold setting screen illustrated in Fig. 9 is a screen to set a threshold. The threshold is the upper limit number of the number of the thumbnail images that can be displayed in the preview region 700. The threshold setting screen illustrated in Fig. 9 is displayed in the display region of the operation unit 220 by performing an execution operation of the corresponding item from a menu included in a setting management screen of the MFP 101.

In the example in Fig. 9, a numerical value item 900 is displayed on the threshold setting screen. The numerical value item 900 is an item to set the numerical value. The numerical value set in the numerical value item 900 is the upper limit number of the number of the thumbnail images that can be displayed in the preview region 700.

Additionally, in the example in Fig. 9, a range designation section 901 is displayed on the threshold setting screen. The range designation section 901 is a section indicating a range settable as the upper limit number. In the example in Fig. 9, an upper limit and a lower limit of the range settable as the upper limit number are indicated in the range designation section 901.

Moreover, in the example in Fig. 9, an operation key 902 is displayed on the threshold setting screen. The operation key 902 is an operation object to decrease the numerical value indicated in the numerical value item 900. The user may decrement the numerical value indicated in the numerical value item 900 by pressing the operation key 902. A decreased result of the numerical value is reflected to the numerical value in the numerical value item 900. Note that, in a case where the decreased result of the numerical value is smaller than the lower limit of the settable range, the result is not reflected to the numerical value in the numerical value item 900, and the numerical value in the numerical value item 900 is maintained at the lower limit of the settable range. In a case where the decreased result of the numerical value is smaller than the lower limit of the settable range, the display of the operation key 902 may be changed to a state in which the operation is invalid.

Furthermore, in the example in Fig. 9, an operation key 903 is displayed on the threshold setting screen. The operation key 903 is an operation object to increase the numerical value indicated in the numerical value item 900. The user may increment the numerical value indicated in the numerical value item 900 by pressing the operation key 903. An increased result of the numerical value is reflected to the numerical value in the numerical value item 900. Note that, in a case where the increased result of the numerical value is greater than the upper limit of the settable range, the numerical value in the numerical value item 900 is not reflected, and the numerical value in the numerical value item 900 is maintained at the upper limit of the settable range. In a case where the increased result of the numerical value is greater than the upper limit of the settable range, the display of the operation key 903 may be changed to a state where the operation is invalid.

Additionally, in the example in Fig. 9, an operation key 904 is displayed on the threshold setting screen. The operation key 904 is the operation object to determine the setting of the upper limit number. Once the operation key 904 is pressed, the CPU 211 sets the upper limit number by storing the numerical value set in the numerical value item 900 as information indicating the upper limit number of the number of the thumbnail images that can be displayed in the preview region 700 into a storage unit such as the HDD 214.

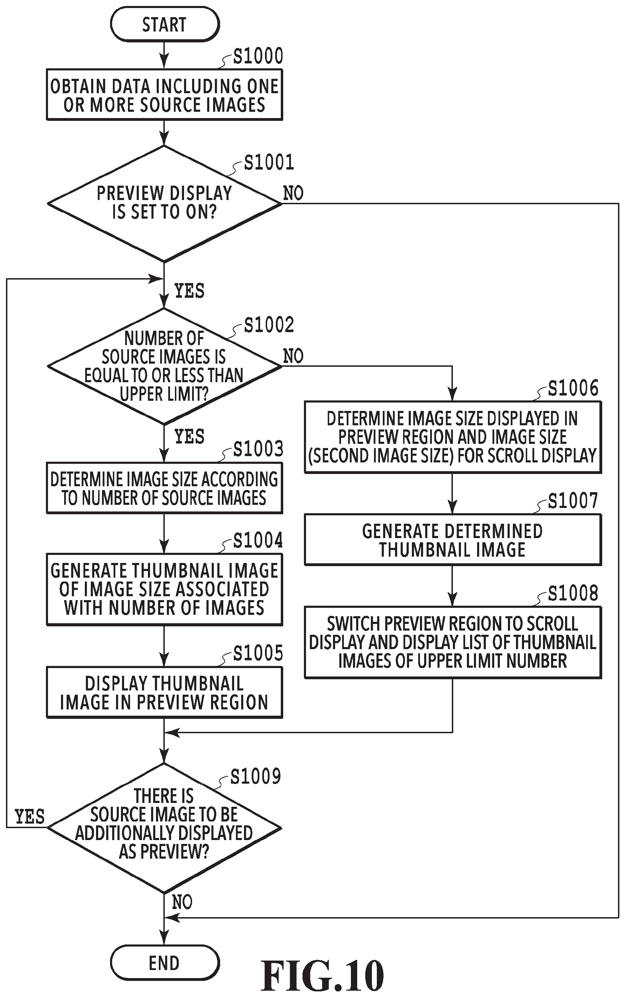

Fig. 10 is a flowchart illustrating an example of a processing procedure executed by the MFP 101. A series of processing illustrated in the flowchart in Fig. 10 is started by activating the application that executes the "scan and transmit" function according to pressing of the operation key 611 on the operation screen illustrated in Fig. 6.

The processing of each step illustrated in the following flowchart is executed with the CPU 211 executing the program stored in the HDD 214 and the like. The program may be stored in one storage device or may be distributed to multiple storage devices. Additionally, a subject that executes the program is not limited to a case where there is a single CPU 211, and a case where the CPU 211 cooperates with another CPU, a GPU, or the like is also included. Note that, a part of or all the processing of each step illustrated in the following flowchart may be implemented by hardware such as an ASIC or an electronic circuit. Moreover, a sign "S" in the following descriptions of the flowchart indicates a step.

In S1000, the CPU 211 obtains data including one or more source images. That is, the CPU 211 requests the scanner 222 to perform reading according to the setting information indicating the contents set in each scan setting item. The scanner 222 reads the document according to the setting information and converts the obtained signal into the image data according to the setting information. Additionally, the scanner 222 outputs the converted image data to the CPU 211 as a response to the reading request. The CPU 211 obtains the image data outputted from the scanner 222 as the data including one or more source images. Once the data including one or more source images is obtained, the processing proceeds to S1001.

In S1001, the CPU 211 judges whether the preview display is set to ON. If it is judged that the preview item 607 is set to "OFF," the CPU 211 ends the series of processing illustrated in the flowchart in Fig. 10. On the other hand, if it is judged that the preview item 607 is set to "ON," the CPU 211 displays the preview screen in the display region of the operation unit 220 and allows the processing to proceed to S 1002.

In S1002, the CPU 211 compares the number of the source images included in the data obtained in S1000 with the upper limit number. If the number of the source images is equal to or less than the upper limit number, the processing proceeds to S1003.

In S1003, the CPU 211 determines the image size displayed in the preview region 700 according to the number of the source images. Specifically, if there are the first number of the source images included in the image data obtained in S1000, the image size smaller than the image size in a case where the number of the source images is the second number, which is less than the first number, is determined as the image size displayed in the preview region 700. Once the image size displayed in the preview region 700 is determined, the processing proceeds to S1004.

Note that, a table is used to determine the image size displayed in the preview region 700. The table is stored in a storage medium to which the CPU 211 is accessible. The accessible storage medium may be the HDD 214, the ROM 212, or a storage apparatus outside the MFP 101. In the table, the image size is associated with each number of the images included in the range designated in the range designation section 901. In other words, the image size associated with each number of the images is prescribed in a table format for the fixed preview region 700. The table is defined such that the image size decreases as the number of the images increases.

In S1004, the CPU 211 generates the thumbnail image of the image size determined in S1003 based on the image data obtained in S1000. That is, the CPU 211 contracts the source image included in the image data obtained in S1000 to the image size determined in S1003. In a case where there is one source image included in the image data obtained in S1000, the thumbnail image corresponding to the one source image is generated in the image size associated with one image. In a case where there are multiple source images included in the image data obtained in S1000, the thumbnail image corresponding to each of the multiple source images is generated in the image size associated with multiple images. Once the thumbnail image is generated, the processing proceeds to S1005. In S1005, the CPU 211 displays the thumbnail image generated in S1004 in the preview region 700. Thereafter, the processing proceeds to S1009.

As a comparison result in S1002, if the number of the source images exceeds the upper limit number, the processing proceeds to S1006.

In S1006, the CPU 211 determines the image size displayed in the preview region 700 and a second image size that is the image size for the scroll display. In the present embodiment, the CPU 211 determines both the image size displayed in the preview region 700 and second image size that is the image size for the scroll display as the image size associated with the upper limit number. Note that, the second image size may be the image size associated with the excess number. Alternatively, the second image size may be the image size other than the image size associated with the upper limit number or the image size associated with the excess number. Once each image size is determined, the processing proceeds to S1007.

In S1007, based on the image data obtained in S1000, the CPU 211 generates the thumbnail image of the image size determined in S1006. That is, the CPU 211 contracts the source image to be displayed in the preview region 700, which is out of the multiple source images included in the image data obtained in S1000, to the image size associated with the upper limit number. Additionally, the CPU 211 contracts the source image to be scroll-displayed, which is out of the multiple source images included in the image data obtained in S1000, to the second image size. In the present embodiment, as with the source image to be displayed in the preview region 700, the CPU 211 contracts also the source image to be scroll-displayed to the image size associated with the upper limit number. Once the thumbnail image is generated, the processing proceeds to S1008.

In S1008, the CPU 211 switches the preview region 700 to the scroll display. Additionally, the CPU 211 displays the list of the thumbnail images of the image size associated with the upper limit number generated in S1007 in the preview region 700. The thumbnail image of the second image size generated in S1007 is displayed according to the movement of the display range of the preview region 700. Once the thumbnail image of the image size associated with the upper limit number is displayed, the processing proceeds to S1009.

In S1009, the CPU 211 judges whether there is the source image to be additionally displayed as a preview. If there is the source image to be additionally displayed as a preview, the CPU 211 returns to S1002, and if there is no source image to be additionally displayed as a preview, the CPU 211 ends the series of processing illustrated in the flowchart in Fig. 10.

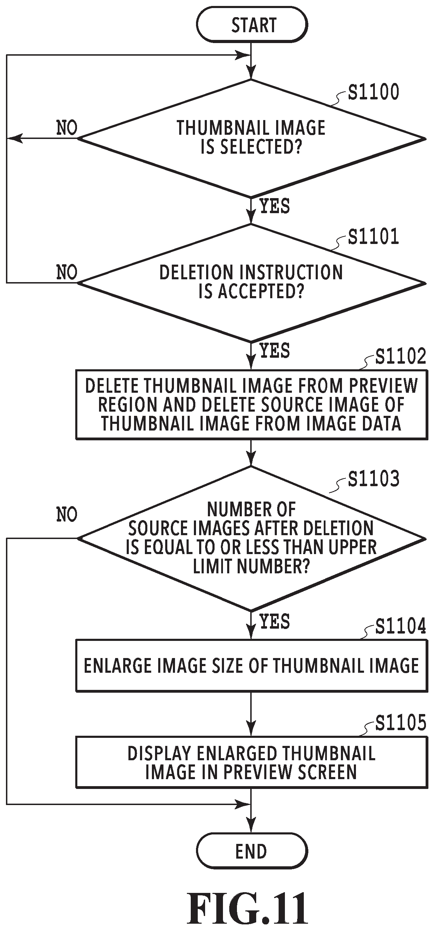

Fig. 11 is a flowchart illustrating an example of another processing procedure executed by the MFP 101. A series of processing illustrated in the flowchart in Fig. 11 is started once the multiple thumbnail images 701 are displayed in the preview region 700, for example.

In S1100, the CPU 211 judges whether one of the multiple thumbnail images 701 displayed in the preview region 700 is selected. If it is judged that one of the multiple thumbnail images 701 is not selected, the CPU 211 performs the judgement again after a predetermined elapsed time. If it is judged that one of the multiple thumbnail images 701 is selected, the CPU 211 allows the processing to proceed to S1101.

In S1101, the CPU 211 judges whether a deletion instruction of the thumbnail image 701 is accepted. If no deletion instruction of the thumbnail image 701 is accepted, the CPU 211 returns the processing to S1100. If the deletion instruction of the thumbnail image 701 is accepted, the CPU 211 allows the processing to proceed to S1102.

In S1102, the CPU 211 deletes the thumbnail image 701 selected in S1001 from the preview region 700. Additionally, the source image of the thumbnail image 701 selected in S1001 is deleted from the image data obtained from the scanner 222. Once the thumbnail image 701 and the source image of the thumbnail image 701 are deleted, the processing proceeds to S1103.

In S1103, the CPU 211 compares the number of the source images after the deletion included in the image data with the upper limit number. If the number of the source images after the deletion included in the image data exceeds the upper limit number, the series of processing in the flowchart illustrated in Fig. 11 ends. If the number of the source images after the deletion included in the image data is equal to or less than the upper limit number, the processing proceeds to S1104.

In S1104, the CPU 211 enlarges the image size of the thumbnail image corresponding to the source image that is not deleted and remains. For example, the CPU 211 enlarges the image size of the thumbnail image as an enlargement target by an enlargement rate determined in advance. Alternatively, as with the case described in the above-described S1003, the CPU 211 enlarges the image size of the thumbnail image as the enlargement target. In this case, the CPU 211 determines the image size according to the number of the source images after the deletion and enlarges the image size of the thumbnail image as the enlargement target to the determined image size. Once the image size of the thumbnail image is enlarged, the processing proceeds to S1105.

In S1105, the CPU 211 replaces the thumbnail image 701 displayed in the preview region 700. Specifically, the CPU 211 replaces the thumbnail image 701 of the image size displayed in the preview region 700 that is before the enlargement with the thumbnail image of the image size that is enlarged in S1104. Once the thumbnail image 701 is replaced, the series of processing in the flowchart illustrated in Fig. 11 ends.

As described above, according to the present embodiment, the preview region 700 may be utilized effectively. For example, the CPU 211 as an obtainment unit obtains the image data including one or more source images as the display target in the preview region 700 from the scanner 222. The CPU 211 as a determination unit determines the image size displayed in the preview region 700 according to the number of the source images included in the obtained image data. The CPU 211 as a display control unit performs control such that the thumbnail image of the determined image size is displayed in the preview region 700 based on the obtained image data. Thus, it is possible to increase an occupancy amount of the thumbnail image 701 in the preview region 700 more than a case where the image size of the thumbnail image is fixed. As a result, a blank space of the preview region 700 is decreased, and the preview region 700 may be utilized effectively.

Additionally, in the present embodiment, the CPU 211 as a setting unit sets the upper limit number of the thumbnail images 701 that can be displayed in the preview region 700. The CPU 211 as the determination unit determines the image size corresponding to the number less than the upper limit number as the image size associated with the number of the source images. Thus, the preview region 700 may be utilized effectively while maintaining the clear viewability.

Moreover, in the present embodiment, the CPU 211 as the setting unit may change the setting of the upper limit number according to an operation by the user. Thus, the viewability according to the preference of the user may be secured.

Furthermore, in the present embodiment, the CPU 211 as the determination unit determines the image size corresponding to the number exceeding the upper limit number as the second image size. In a case where the second image size is determined, the CPU 211 as the display control unit switches the preview region 700 to the scroll display and displays the thumbnail image of the second image size along with the movement of the display range of the preview region 700. Thus, even in a case where there are a great number of the source images, the preview region 700 may be utilized effectively while maintaining the clear viewability.

Additionally, in the present embodiment, in a case where the deletion instruction of the selected thumbnail image is accepted, the CPU 211 as the display control unit deletes the selected thumbnail image from the preview region 700. In addition, the CPU 211 enlarges the image size of the thumbnail image that is not deleted and remains in the preview region 700. Thus, the preview region 700 may be utilized effectively while maintaining the clear viewability.

### <Second Embodiment>

### (Overview)

In the first embodiment, an example in which the image size of the thumbnail image that is not deleted and remains is enlarged in a case where the thumbnail image 701 displayed in the preview region 700 is deleted is described. In the present embodiment, an example of not changing the image size of the thumbnail image that is not deleted and remains is described. Note that, hereinafter, descriptions of the contents common to the first embodiment are omitted as needed, and different points are mainly described.

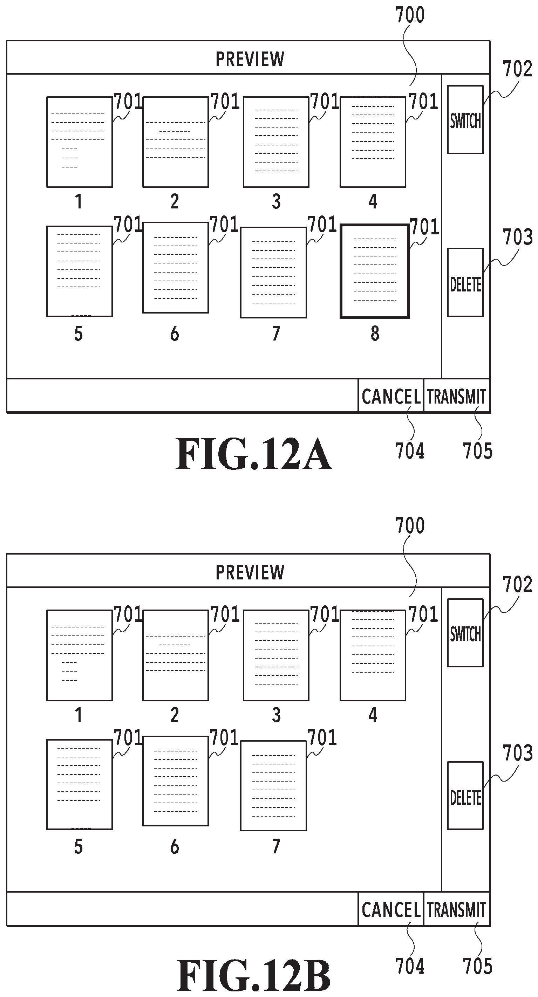

Fig. 12A is a diagram illustrating an example of the preview screen in a case where the number of the source images is eight. In the example in Fig. 12A, the thumbnail image 701 corresponding to each of the eight source images is displayed in the preview region 700. Additionally, in the example in Fig. 12A, the eighth thumbnail image 701 is displayed in a state of being selected from the thumbnail images 701 displayed in the preview region 700.

Fig. 12B is a diagram illustrating an example of the preview screen after the image is deleted. In the example in Fig. 12B, the eighth thumbnail image of the thumbnail images 701 illustrated in Fig. 12A is deleted from the preview region 700. In the present embodiment, the series of processing in the flowchart illustrated in Fig. 11 is not executed. Therefore, in the preview region 700 after the image is deleted, even in a case where the eighth thumbnail image is deleted, the image size of the thumbnail image 701 that is not deleted and remains is not changed.

Thus, in the present embodiment, in a case where the thumbnail image displayed in the preview region 700 is deleted, the image size of the thumbnail image that is not deleted and remains in the preview region 700 is maintained. Thus, even in a case where the thumbnail image is deleted, since the layout of the thumbnail image displayed in the preview region 700 is not changed, the user may figure out at a glance whether the corresponding thumbnail image is deleted.

### <Third Embodiment>

### (Overview)

In the present embodiment, an example of not changing the image size of the thumbnail image even in a case where the thumbnail image 701 displayed in the preview region 700 is moved. Note that, hereinafter, descriptions of the contents common to the first embodiment are omitted as needed, and different points are mainly described.

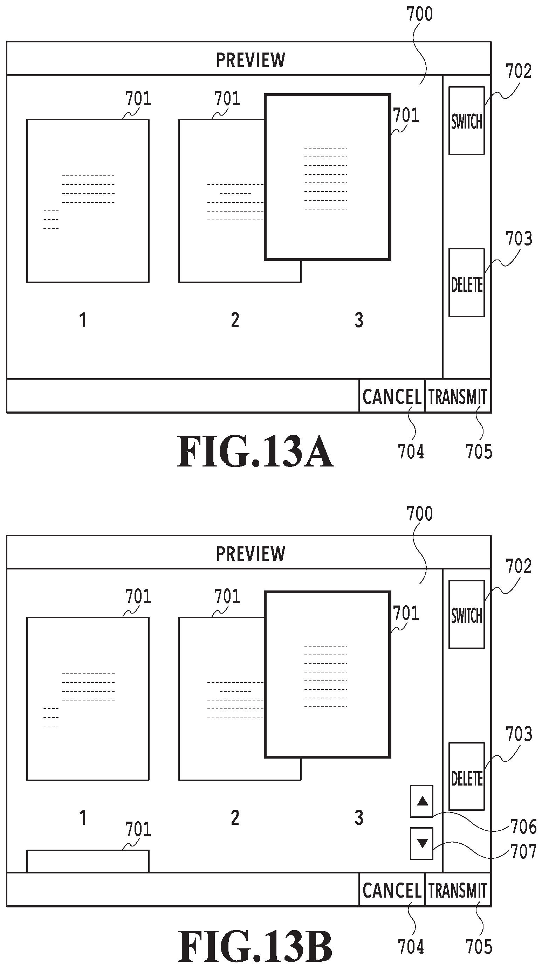

Fig. 13A is a diagram illustrating an example of the preview screen in a case where the thumbnail image 701 is being moved. In the example in Fig. 13A, the thumbnail image 701 corresponding to each of three source images is displayed in the preview region 700. Additionally, in the example in Fig. 13A, the third thumbnail image 701 of the thumbnail images 701 displayed in the preview region 700 is moved to a position of the second thumbnail image 701. The user can perform a drag-and-drop operation in a touch operation to move the desired thumbnail image 701. In the preview region 700, the image size of the thumbnail image 701 is not changed even in a case where the thumbnail image 701 is being moved.

Fig. 13B is a diagram illustrating an example of the preview screen in a case where the fourth thumbnail image 701 is added while the thumbnail image 701 is being moved. In the example in Fig. 13B, the preview region 700 is switched to the scroll display, and a part of the fourth thumbnail image 701 is displayed below the first thumbnail image 701. That is, the newly added thumbnail image 701 is the image as a scroll target, and the image size of the newly added thumbnail image 701 is the second image size. On the other hand, the image size of each of the first to third thumbnail images 701 already displayed in the preview region 700 is not changed.

Thus, in the present embodiment, in a case where the operation is performed on the thumbnail image 701 displayed in the preview region 700, the CPU 211 as the display control unit maintains the image size of the thumbnail image displayed in the preview region 700. Thus, since the image size of the thumbnail image is not changed even in a case of changing the layout of the preview region 700 according to the operation such as moving the thumbnail image 701, a wrong operation by the user may be prevented.

Additionally, in the present embodiment, in a case where the source image is added as the display target in the preview region 700 after the thumbnail image is displayed in the preview region 700, the image size of the thumbnail image 701 displayed in the preview region 700 is maintained. In this case, the CPU 211 as the determination unit determines the image size of the thumbnail image corresponding to the added source image as the second image size. The CPU 211 as the display control unit switches the preview region 700 to the scroll display and displays the thumbnail image of the second image size along with the movement of the display range of the preview region 700. Thus, since the image size of the thumbnail image displayed in the preview region 700 is not changed even in a case where the thumbnail image is added, a wrong operation and the like of the user may be prevented.

### <Other Embodiments>

The present disclosure is not limited to the above-described embodiment.

For example, although the size of the preview region 700 is fixed in the above-described embodiment, the present disclosure is not limited thereto. The size of the preview region 700 may be changeable. In this case, the CPU 211 as the determination unit may determine the image size by using a table indicating a proportion of the image size to the size of the preview region for each number of the thumbnail images, for example. The table is defined such that the proportion of the image size to the size of the preview region decreases as the number of the thumbnail images increases.

Additionally, although the image size of the thumbnail images of the upper limit number that can be displayed in the preview region 700 is determined as the image size associated with the number of the thumbnail images in the above-described embodiment, the present disclosure is not limited thereto. The image size of the thumbnail image may be determined as the image size associated with the number of the thumbnail images regardless of the upper limit number of the number of the thumbnail images that can be displayed in the preview region 700. Even in this case, the preview region 700 may be utilized effectively as with the above-described embodiment; however, the viewability of the thumbnail image deteriorates as the number of the thumbnail images increases. To deal with this, for example, an operation object to switch the display to the scroll display may be provided on the preview screen. Once an operation performed on the operation object is accepted, the CPU 211 displays the thumbnail images corresponding to the source images of the upper limit number in the preview region 700 in the image size associated with the number of the thumbnail images. In addition, the CPU 211 switches the preview region 700 to the scroll display and displays the thumbnail image of the second image size corresponding to the source image, whose number exceeds the upper limit number, along with the movement of the display range of the preview region 700.

Moreover, although the image size of the thumbnail image is determined according to the number of the source images in the above-described embodiment, a common size may be applied in a case of a specific number. For example, in a case where the upper limit number is set to eight, and the number of the source images is six, the CPU 211 determines the image size to be common to the image size in a case where the number of the source images is five. In this case, the thumbnail images corresponding to the six source images, respectively, are displayed in the preview region 700 in the image size associated with five. The layout in this case may be the same as the layout in a case where the thumbnail images corresponding to the five source images, respectively, are displayed in the preview region 700 in the image size associated with five, or may be different.

Furthermore, although the data including one or more source images as the display target in the preview region 700 is the image data outputted from the scanner 222 in the above-described embodiment, the present disclosure is not limited thereto. For example, the data including one or more source images as the display target in the preview region 700 may be print data supplied from an external apparatus such as a PC. Alternatively, the data including one or more source images as the display target in the preview region 700 may be data other than the image data outputted from the scanner 222 and the print data.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An image processing apparatus (101), comprising:
a reading unit configured to read a document;
an obtainment unit configured to obtain image data obtained with the reading unit reading the document;
a determination unit configured to determine an image size displayed in a preview region (700) according to the number of images based on the obtained image data; and
a display control unit configured to perform control so as to display a thumbnail image of the image size, which is determined by the determination unit, in the preview region, wherein
in a case where the number of the images is equal to or less than a predetermined number, the determination unit determines an image size based on the number of the images as the image size displayed in the preview region, and in a case where the number of the images is greater than the predetermined number, the determination unit determines a predetermined image size as the image size displayed in the preview region.

2. The image processing apparatus according to claim 1,
further comprising a setting unit configured to set an upper limit number of thumbnail images that can be displayed in the preview region, wherein the determination unit is configured to:
determine the image size based on the number of the images in a case where the number of the images is equal to or less than the upper limit number; and
determine the predetermined image size in a case where the number of the images is greater than the upper limit number.

3. The image processing apparatus according to claim 2, wherein
the setting unit is configured to change the setting of the upper limit number according to an operation by a user.

4. The image processing apparatus according to claim 2 or 3, wherein
the determination unit is configured to determine the image size corresponding to the number exceeding the upper limit number as a second image size; and
the display control unit is configured to, in a case where the second image size is determined, switch the preview region to a scroll display, and display the thumbnail images of the second image size along with movement of a display range of the preview region.

5. The image processing apparatus according to claim 4, wherein
the determination unit is configured to, in a case where an image is added as a display target in the preview region after a thumbnail image is displayed in the preview region, determine an image size of a thumbnail image corresponding to the added image as the second image size.

6. The image processing apparatus according to claim 4 or 5, wherein
the second image size is an image size associated with an excess number or an image size associated with the upper limit number.

7. The image processing apparatus according to any one of claims 1 to 6, wherein
the determination unit is configured to, in a case where the number of images is a first number, determine a smaller image size of the thumbnail image than an image size in a case where the number of images is a second number that is smaller than the first number.

8. The image processing apparatus according to any one of claims 1 to 7, wherein
the display control unit is configured to, in a case where a deletion instruction of a selected thumbnail image is accepted, delete the selected thumbnail image from the preview region, and enlarge the image size of the thumbnail image that is not deleted and remains in the preview region.

9. The image processing apparatus according to any one of claims 1 to 7, wherein
the display control unit is configured to, in a case where a deletion instruction of a selected thumbnail image is accepted, delete the selected thumbnail image from the preview region, and maintain the image size of the thumbnail image that is not deleted and remains in the preview region.

10. The image processing apparatus according to any one of claims 1 to 9, wherein
the display control unit is configured to, in a case where an operation is being performed on the thumbnail image displayed in the preview region, maintain the image size of the thumbnail image displayed in the preview region.

11. The image processing apparatus according to any one of claims 1 to 10, wherein
the display control unit is configured to perform control to display an operation object to switch display from a preview screen including the preview region to a screen displaying and focusing on one thumbnail image displayed in the preview region, and in a case where the number of the images is equal to or less than the predetermined number, change the display of the operation object to a state in which an operation is invalid.

12. The image processing apparatus according to any one of claims 1 to 11, wherein
the image data is outputted from a scanner.

13. The image processing apparatus according to any one of claims 1 to 11, wherein
the image data is supplied from an external apparatus.

14. The image processing apparatus according to any one of claims 1 to 13, wherein
a size of the preview region is fixed.

15. A control method of an image processing apparatus (101) including a reading unit configured to read a document, comprising:
obtaining image data obtained with the reading unit reading the document;
determining an image size displayed in a preview region (700) according to the number of images based on the obtained image data; and
performing control so as to display a thumbnail image of the image size, which is determined in the determining, in the preview region, wherein
in the determining, in a case where the number of the images is equal to or less than a predetermined number, an image size based on the number of the images is determined as the image size displayed in the preview region, and in a case where the number of the images is greater than the predetermined number, a predetermined image size is determined as the image size displayed in the preview region.

16. A program for causing a computer to function as each unit of the image processing apparatus (101) according to any one of claims 1 to 14.
